Europäisches Patentamt

European Patent Office

Office européen des brevets

(11) Numéro de publication: **0 429 349 A1**

# DEMANDE DE BREVET EUROPEEN

(21) Numéro de dépôt: 90403259.6

(51) Int. Cl.5: **H01Q 1/12**, G01S 3/42

(22) Date de dépôt: **19.11.90**

(30) Priorité: **20.11.89 FR 8915186**

(43) Date de publication de la demande:
**29.05.91 Bulletin 91/22**

(84) Etats contractants désignés:
**DE ES GB IT NL**

(71) Demandeur: **INTERTECHNIQUE**
**Boîte Postale 1**
**F-78374 Plaisir(FR)**

(72) Inventeur: **Martini, Willy**
**40 Clos Edmond**
**F-91120 Palaiseau(FR)**
Inventeur: **Pannetrat, Jean-Claude**
**5 Avenue de la Convention**
**F-94110 Arcueil(FR)**

(74) Mandataire: **Fort, Jacques**
**CABINET PLASSERAUD 84, rue d'Amsterdam**
**F-75009 Paris(FR)**

(54) **Procédé et installation de transmission de signal à large bande à partir d'un équipement mobile.**

(57) L'installation, utilisable pour les prises de vue sur la voie publique, comprend un équipement mobile muni d'un émetteur sur une première fréquence porteuse, d'une antenne émettrice attaquée par l'émetteur et d'une antenne réceptrice (20), et une station de recueil munie d'une antenne (16) de réception à la première fréquence et d'une antenne (18) de renvoi d'un signal de retour à une seconde fréquence. L'émetteur est accordé sur une fréquence de porteuse choisie de façon que le rayon de l'ellipsoïde de Fresnel soit inférieur à la distance entre l'antenne (14) et l'obstacle réfléchissant le plus proche et des moyens étant prévus dans l'équipement mobile pour asservir le lobe d'émission de l'antenne émettrice (14) vers l'antenne (16) de réception de la station de recueil, lesdits moyens utilisant le signal de retour vers l'équipement mobile.

## PROCÉDÉ ET INSTALLATION DE TRANSMISSION DE SIGNAL À LARGE BANDE À PARTIR D'UN ÉQUIPEMENT MOBILE

L'invention a pour objet un procédé et une installation de transmission d'un signal à large bande par voie hertzienne à partir d'un équipement mobile muni d'un émetteur vers une station de recueil munie d'un récepteur.

L'invention trouve une application particulièrement importante, bien que non exclusive, dans le domaine du reportage de télévision à l'aide d'une caméra portée par un cadreur, fournissant des signaux représentant une voie image et, fréquemment, une voie son (ou plusieurs) qui sont transmis à un véhicule arrêté, constituant station fixe de recueil où le signal est enregistré ou d'où il est relayé vers un émetteur de diffusion.

Alors que la transmission du son par voie hertzienne à partir d'un microphone baladeur vers une station de recueil ne soulève pas de difficultés graves, du fait que la bande passante requise est étroite (300 à 3000 Hz par exemple), il n'en est pas de même pour la transmission d'image de télévision qui exige une bande large (>6 MHz par exemple pour un signal PAL ou SECAM) ; la liaison peut être perturbée par les échos multiples dûs à l'illumination d'obstacles réfléchissants (sol, murs, véhicules, etc.) par l'antenne de la caméra. Il peut notamment y avoir évanouissement à la réception pour certains emplacements de la caméra. Or, le cadreur doit rester entièrement libre de ses déplacements et de son orientation.

A ce jour, ce problème conduit à relier la station de recueil à la caméra par un câble ayant une bonne immunité aux parasites : la suppression de la liaison hertzienne fait disparaître les phénomènes d'écho et donc d'évanouissement.

Mais l'utilisation d'un câble représente une contrainte, puisque le câble gène les déplacements du cadreur. Cette contrainte est particulièrement gênante en terrain accidenté ou dans une foule.

L'invention vise à permettre la transmission d'un signal à large bande, et notamment d'un signal de télévision, par voie hertzienne en rendant négligeables les altérations du signal et le risque d'évanouissement.

Pour résoudre le problème, il faut d'abord prendre conscience que l'extinction d'une porteuse modulée de façon non linéaire, notamment en phase ou en fréquence, peut être provoquée par des phénomènes d'écho dans des cas où une porteuse pure ne serait pas affectée.

Dans le cas d'une porteuse pure, il n'y a d'évanouissement que lorsque le trajet direct de l'antenne émettrice vers le récepteur et le trajet réfléchi par un écho différent de la demi-longueur d'onde $\lambda/2$, $\lambda$ étant la longueur d'onde à la fréquence de la porteuse.

En revanche, lorsque la porteuse est modulée, il y a aussi évanouissement lorsque les trajets direct et réfléchi diffèrent de $\lambda M/2$, $\lambda M$ étant la longueur d'onde associée à la plus haute fréquence de la bande de base, qui correspond à toute l'étendue du signal composite transmis (prenant donc en compte la sous-porteuse de chrominance dans le cas d'un signal SECAM, PAL ou NTSC).

1. Une condition suffisante pour qu'il y ait transmission d'une porteuse pure sans risque d'interférences provoquant un évanouissement est que l'ellipsoïde de Fresnel pour la longueur d'onde de la porteuse soit entièrement dégagé d'obstacles réfléchissants. Le rayon r au maître-couple de cet ellipsoïde de révolution est donné par la relation :

$$r = 1/2 \sqrt{\lambda . D}$$

où D désigne la distance entre l'émetteur et le récepteur.

Dans le cas de la télévision, l'obstacle le plus proche à prendre en considération est généralement le sol. La caméra est en général portée à l'épaule, à une hauteur au-dessus du sol dépassant 1,60 m. Pour une longueur d'onde de 3 cm, correspondant à une fréquence de porteuse de 10 GHz, le rayon de l'ellipsoïde au maître-couple est de 0,85 m, inférieur à la hauteur d'un homme portant la caméra, ce qui exclut le premier risque. Au contraire, le choix d'une fréquence nettement plus basse, par exemple de 2,5 GHz, conduit à un rayon au maître-couple de l'ellipsoïde de 1,70 m pour une distance de 100 m entre émetteur et récepteur, ce qui crée un risque d'interférence et donc d'évanouissement.

L'invention propose en conséquence, en tant que première mesure, d'adopter une fréquence de porteuse telle que le rayon de l'ellipsïide de Fresnel soit inférieur à la distance entre l'antenne et l'obstacle réfléchissant le plus proche, ce qui conduit, dans le cas de la télévision, à adopter une fréquence supérieure à 8 GHz environ, dans le cas fréquent d'une distance entre émetteur et récepteur de l'ordre de 100 m. Pour tenir compte du plan de fréquence fixant les plages autorisées, on sera souvent amené à adopter une fréquence de l'ordre de 12 GHz.

2. Cette mesure n'est pas suffisante dans le cas d'une porteuse à modulation non linéaire : elle ne permet pas de remédier au risque d'extinction lié à la bande de base de modulation, qui, pour la télévision, peut aller de 5 à 10 MHz suivant le standard de télévision concerné.

Pour résoudre ce second problème, il est proposé d'utiliser une antenne d'émission à partir de l'équipement mobile qui est directrice, et d'asservir le lobe d'émission de cette antenne en position vers la station de recueil, l'asservissement étant réalisé par détection d'un signal de retour vers l'équipement mobile, fourni par la station de recueil.

La complication apportée par l'invention à un système classique, qui utilise généralement une antenne omnidirectionnelle, est beaucoup plus apparente que réelle. Il est en effet nécessaire, dans la plupart des cas, de prévoir un signal de retour à partir de la station de recueil vers l'équipement mobile. Par exemple en télévision, une liaison de la station de recueil vers l'équipement mobile est prévue pour fournir au cadreur des instructions et/ou une représentation de l'image telle qu'elle est effectivement recueillie. Au surplus, le choix d'une fréquence élevée, première mesure exposée plus haut, permet de réaliser la directivité requise en conservant une antenne de petite taille, facile à placer sous un dôme de protection.

L'orientation du lobe d'antenne peut être asservie de diverses façons. Une solution avantageuse consiste à asservir l'orientation d'un aérien unique d'antenne d'émission à celle d'une antenne de goniométrie, recevant le signal de retour (la goniométrie étant avantageusement réalisée par écartométrie à recherche de déphasage nul). Une autre solution consiste à prévoir plusieurs aériens d'antenne répartis angulairement et à sélectionner l'aérien le mieux orienté, à partir du signal de goniométrie.

Pour obtenir de bons résultats, il est souhaitable que l'aérien ou chaque aérien d'antenne d'émission ait un lobe principal dont l'ouverture au dixième de la puissance ne dépasse pas 20°. L'asservissement en azimut est essentiel : il est possible, bien que souvent superflu, de le compléter par un asservissement en site.

En résumé, l'invention propose notamment un procédé de transmission hertzienne par modulation d'une porteuse avec une bande de base large à partir d'un équipement mobile muni d'un émetteur sur une première fréquence porteuse, d'une antenne émettrice et d'une antenne réceptrice vers une station de recueil munie d'une antenne de réception à la première fréquence et d'une antenne de renvoi d'un signal de retour, à une seconde fréquence, suivant lequel la fréquence de la porteuse est choisie de façon que le rayon de l'ellipsoïde de Fresnel soit inférieur à la distance entre l'antenne et l'obstacle réfléchissant le plus proche, et suivant lequel l'antenne émettrice est directive et le lobe d'émission de l'antenne directive est asservi pour le maintenir dirigé vers la station de recueil, l'asservissement étant réalisé par détection du signal de retour vers l'équipement mobile, fourni par la station de recueil.

L'invention propose également une installation de transmission permettant de mettre en oeuvre le procédé ci-dessus défini.

L'invention sera mieux comprise à la lecture de la description qui suit d'un mode particulier de réalisation, donné à titre d'exemple non limitatif. La description se réfère aux dessins qui l'accompagnent, dans lesquels :

- la Figure 1 est un schéma de principe montrant les composants principaux d'une installation suivant l'invention, destinée à la transmission d'un signal de télévision à partir d'une caméra vers un véhicule constituant station de recueil ;
- la Figure 2 est un synoptique de principe montrant les liaisons entre les antennes de la caméra constituant l'équipement mobile ;
- la Figure 3 est un schéma destiné à montrer les conditions à remplir pour le lobe principal d'émission de l'antenne portée par l'équipement mobile.

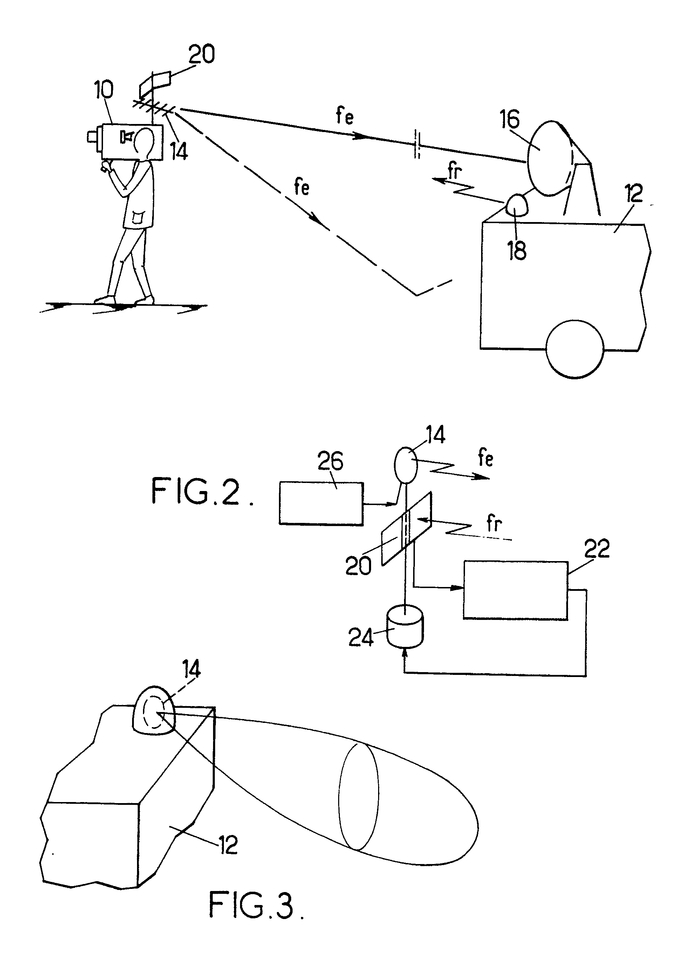

L'installation montrée schématique en Figure 1 comporte un équipement mobile constituée par une caméra destinée à être portée par un cadreur et une station de recueil 12 constituée par un véhicule. La caméra est munie d'un émetteur à modulation d'une porteuse d'émission à fréquence $f_e$ et d'une antenne d'émission 14. La station de recueil 12 est munie d'un récepteur (non représenté) accordé sur la fréquence $f_e$ et muni d'une antenne de réception 16.

Pour permettre la mise en oeuvre de l'invention, la station 12 comporte également un émetteur (non représenté) modulant une porteuse sur une fréquence de retour $f_r$ différente de $f_e$ et proche de cette dernière, relié à une antenne 18. Alors qu'il est préférable que l'antenne 16 soit directive, comme on le verra plus loin, l'antenne 18 peut être au contraire omnidirectionnelle. L'équipement mobile comporte une antenne 20 de réception du signal en retour à fréquence $f_r$.

Selon l'invention, la fréquence $f_e$ a une valeur suffisamment élevée pour éviter les phénomènes d'évanouissement dûs à la présence d'obstacles réfléchissants dans l'ellipsoïde de Fresnel ayant pour foyer les emplacements des antennes 14 et 16 et, pour rayon $r$ au maître-couple :

$r : 1/2 \sqrt{CD/f_e}$, où $C$ est la vitesse de propagation du rayonnement émis.

$D$ étant la distance entre les antennes 14 et 16.

L'obstacle réfléchissant le plus proche est généralement le sol : pour éviter des interférences entre le trajet direct (en trait plein sur la Figure 1) et le trajet réfléchi (en tirets), il est nécessaire d'adopter une fréquence $f_e$ telle que $r$ soit inférieur à 1,70 m. Cela conduit, pour une distance $D$ de 100 m, à une fréquence supérieure à 2,5 GHz. Etant donné que des distances $D$ supérieures, de plusieurs centaines de mètres, sont fréquentes, on sera généralement conduit à adopter une fréquence de porteuse dépassant 10 GHz. Une fréquence dans la bande des 12 GHz sera souvent satisfaisante. Le choix d'une fréquence encore supérieure conduirait à augmenter considérablement le prix de l'installation.

Pour écarter, ou du moins limiter, les risques d'évanouissement dûs à la modulation non linéaire de la porteuse, l'antenne 14 doit être directive et son lobe principal doit être dirigé vers l'antenne de réception 16.

La directivité en site permet de limiter l'énergie reçue par l'antenne 16 suivant un trajet comportant une réflexion sur le sol. La largeur du lobe en site, c'est-à-dire dans le sens vertical, constituera un compromis entre deux impératifs contradictoires. Plus le lobe est étroit (à condition qu'il soit orienté exactement vers l'antenne 16) et plus l'énergie reçue par réflexion est faible. Mais plus on s'écarte de ces conditions optimales du fait que, dans ses mouvements, le cadreur écarte l'antenne d'une position nominale et plus le rapport entre énergie directe et énergie réfléchie diminue. Un compromis en général satisfaisant consiste à utiliser une antenne 14 ayant un lobe dont la section dans le sens vertical est telle que l'on ait au moins 10 dB de différence entre la puissance suivant le trajet direct et la puissance suivant le trajet réfléchi, indiqué en tirets sur la Figure 1. Cette condition sera plus ou moins impérative selon la distance D envisagée et la hauteur au-dessus du sol des antennes 14 et 16. Pratiquement, on arrive à des résultats satisfaisant en adoptant un lobe dont la largeur, dans le sens vertical, au dixième de puissance, est de 30° environ.

L'orientation à donner à l'antenne 14 est déterminée par goniométrie. Dans le mode de réalisation montré en Figures 1 et 2, l'antenne 14 est orientable et solidaire en rotation de l'antenne 20. Dans la pratique, des impératifs d'encombrement conduiront à les placer sur des axes différents. L'antenne 20 est associée à un circuit d'écartométrie 22 dont la constitution peut être classique, orientant l'antenne jusqu'à ce que la différence de phase entre les deux cadres de l'antenne 20 soit nulle. La fréquence fr en retour, utilisée également pour véhiculer les informations destinées au cadreur, doit être proche de la fréquence fe : lorsque la fréquence fe est de 12 GHs par exemple, la fréquence fr peut être de 12,5 GHz.

Le circuit d'écartométrie 22 commande un moteur 24 d'orientation de l'antenne d'écartométrie 20 et, simultanément, l'orientation de l'antenne 14 d'émission qui reçoit la porteuse modulée d'un circuit oscillateur et modulateur 26.

Dans un autre mode de réalisation (non représenté), l'antenne 14 comporte plusieurs aériens dont les lobes sont régulièrement répartis autour de l'axe de gisement. Le nombre de ces aériens est au moins égal à 4 et, de préférence, au moins égal à 9, de façon que leurs lobes, qui doivent présenter un recouvrement, n'aient pas une largeur excessive. Dans ce cas, le circuit d'écartométrie 22 commande l'orientation de l'antenne 20 et commande des commutateurs de sélection d'un des aériens de l'antenne 14.

Pour réduire encore le risque d'évanouissement, il est utile d'utiliser un aérien de réception 16 également directif et muni d'un système d'écartométrie. Pour tenir compte de ce que la réflexion sur un obstacle plan change le sens de polarisation, il peut être avantageux de polariser circulairement le signal hertzien émis à partir de l'antenne 14.

Grâce à ce procédé, on peut réduire de façon très significative les risques d'évanouissement dûs aux réflexions sur des obstacles fixes, notamment le sol, et des obstacles mobiles, tels que les véhicules en cas de prises de vues sur la voie publique.

## Revendications

1. Procédé de transmission hertzienne par modulation de porteuse avec une bande de base large à partir d un équipement mobile, muni d'un émetteur sur une première fréquence porteuse, d'une antenne émettrice (14) et d'une antenne réceptrice (20), vers une station de recueil munie d'une antenne (16) de réception à la première fréquence et d'une antenne (18) de renvoi d'un signal de retour, à une seconde fréquence, caractérisé en ce que la fréquence de la porteuse est choisie de façon que le rayon de l'ellipsoïde de Fresnel soit inférieur à la distance entre l'antenne (14) et l'obstacle réfléchissant le plus proche, en ce que l'antenne émettrice (14) est directive et en ce que le lobe d'émission de cette antenne émettrice est asservi pour le maintenir dirigé vers la station de recueil, l'asservissement étant réalisé par détection du signal de retour vers l'équipement mobile.

2. Procédé selon la revendication 1, caractérisé en ce qu'on oriente le lobe de l'antenne émettrice (14) en asservissant la position angulaire d'un aérien unique de cette antenne à celle d'une antenne d'écartométrie (20) portée par l'équipement mobile.

3. Procédé selon la revendication 1, caractérisé en ce que l'antenne émettrice comporte plusieurs aériens régulièrement répartis autour d'un axe de gisement et sélectionnables.

4. Procédé selon la revendication 1, 2 ou 3, caractérisé en ce que l'asservissement utilise une écartométrie à comparaison de phase.

5. Procédé selon l'une quelconque des revendications précédentes, caractérisé en ce que l'antenne émettrice (14) présente un lobe dont la largeur dans le sens vertical, au dixième de puissance, est de 30° environ.

6. Procédé selon l'une quelconque des revendications précédentes, caractérisé en ce que l'antenne réceptrice (16) de la station de recueil est également asservice de façon à s'orienter vers l'antenne émettrice.

7. Procédé selon l'une quelconque des revendications précédentes, caractérisé en ce qu'on polarise circulairement la porteuse.

8. Application du procédé selon l'une quelconque des revendications précédentes à la télévision, caractérisée en ce qu'on utilise une porteuse à une fréquence supérieure à 10 MHz.

9. Installation de transmission hertzienne mettant en oeuvre le procédé selon la revendication 1, caractérisée en ce qu'elle comprend :

- un équipement mobile muni d'un émetteur sur une première fréquence porteuse, d'une antenne émettrice attaquée par l'émetteur et d'une antenne réceptrice (20),

- et une station de recueil munie d'une antenne (16) de réception à la première fréquence et d'une antenne (18) de renvoi d'un signal de retour à une seconde fréquence,

l'émetteur étant accordé sur une fréquence de porteuse choisie de façon que le rayon de l'ellipsoïde de Fresnel soit inférieur à la distance entre l'antenne (14) et l'obstacle réfléchissant le plus proche et des moyens étant prévus dans l'équipement mobile pour asservir le lobe d'émission de l'antenne émettrice (14) vers l'antenne (16) de réception de la station de recueil, lesdits moyens utilisant le signal de retour vers l'équipement mobile.

FIG.2.

FIG.3.

Office européen
des brevets

**RAPPORT DE RECHERCHE
EUROPEENNE**

Numéro de la demande

**EP 90 40 3259**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | SMPTE JOURNAL vol. 97, no. 1, janvier 1988, White Plains,NY,US pages 17 - 24; B. MOFFAT: "Television engineering research in the BBC today and tomorrow" * page 23, dernier alinéa - page 24; figure 6 * | 1,9 | H 01 Q 1/12 G 01 S 3/42 |
| A | US-A-4 047 175 (TAIRA ET AL) * colonne 2, ligne 38 - colonne 4, ligne 7; figures 1, 3, 4-6, 10 * | 1-9 | |
| A | EP-A-0 077 731 (ETABLISSEMENT PUBLIC TELEDIFFUSION DE FRANCE) * abrégé; figures 1-5 * | 1,9 | |
| A | IEEE TRANSACTIONS ON VEHICULAR TECHNOLOGY. vol. VT-26, novembre 1977, NEW YORK US pages 349 - 357; ANDERSEN ET AL: "Antennas for VHF/UHF Personal Radio : A Theoretical and Experimental Study of Characteristics and Performance" * le document en entier * | 1,8 | |

|  | | | DOMAINES TECHNIQUES RECHERCHES (Int. Cl.5) |
|---|---|---|---|
|  | | | H 01 Q G 01 S |

Le présent rapport de recherche a été établi pour toutes les revendications

| Lieu de la recherche | Date d'achèvement de la recherche | Examinateur |
|---|---|---|
| La Haye | 12 février 91 | ANGRABEIT F.F.K. |